Europäisches Patentamt

European Patent Office

Office européen des brevets

(11) Numéro de publication : **0 072 290**
**B1**

(12) # FASCICULE DE BREVET EUROPÉEN

(45) Date de publication du fascicule du brevet :
09.10.85

(51) Int. Cl.⁴ : **H 04 B   9/00**

(21) Numéro de dépôt : 82401395.7

(22) Date de dépôt : 27.07.82

(54) **Récepteur optique à seuils pour système de transmission numérique à débit variable.**

(30) Priorité : 12.08.81 FR 8115599

(43) Date de publication de la demande :
16.02.83 Bulletin 83/07

(45) Mention de la délivrance du brevet :
09.10.85 Bulletin 85/41

(84) Etats contractants désignés :
BE CH DE GB LI SE

(56) Documents cités :
WO-A-80 /020 92
FR-A- 2 333 387
US-A- 3 509 279
US-A- 4 229 831
IEEE TRANSACTIONS ON COMMUNICATIONS, vol.
COM-20, no. 5, octobre 1972, IEEE, pages 1038-1041,
New York (USA); E.C. THIEDE: "Decision hysteresis
reduces digital Pe"

(73) Titulaire : THOMSON-CSF
173, Boulevard Haussmann
F-75379 Paris Cedex 08 (FR)

(72) Inventeur : Eumurian, Grégoire
THOMSON-CSF SCPI 173, bld Haussmann
F-75379 Paris Cedex 08 (FR)
Inventeur : Gadrault, Robert
THOMSON-CSF SCPI 173, bld Haussmann
F-75379 Paris Cedex 08 (FR)

(74) Mandataire : Trocellier, Roger et al
THOMSON-CSF SCPI 173, Bld Haussmann
F-75379 Paris Cedex 08 (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un récepteur optique à seuils pour équiper un système de transmission numérique à débit variable.

L'utilisation conjuguée de fibres optiques, d'émetteurs optiques rapides et de récepteurs optiques permet d'obtenir des liaisons à large bande allant de· quelques dizaines de mégahertz à plus d'un gigahertz.

Les liaisons optiques présentent par rapport aux liaisons électriques l'avantage d'un isolement galvanique et d'une bande passante étendue, et l'inconvénient d'une fonction de transfert pouvant varier sensiblement en cours d'exploitation surtout dans un environnement sévère. En effet, les connecteurs optiques sont extrêmement sensibles aux tolérances mécaniques et à la poussière.

Par ailleurs, les fibres optiques modifient leur fonction de transfert sous l'action éventuelle des radiations nucléaires. Cette modification peut être importante, divisant, par des facteurs allant de dix à plusieurs centaines, la puissance optique initiale. A ces variations, provoquées par la fibre, viennent s'ajouter les modifications produites par les éléments d'émission et de réception. L'élément d'émission peut être un laser solide ou une diode électroluminescente. Dans les deux cas (notamment plus dans le cas des lasers), la pente de conversion courant-puissance optique qui caractérise ces éléments varie en fonction de la température et du vieillissement.

La réception optique peut être réalisée par deux types de diodes : PIN et à avalanche. Les diodes PIN sont stables en fonction de la température et de la tension de polarisation. Les photodiodes à avalanche, qui présentent une sensibilité environ cent fois plus grande à la lumière, sont en revanche très sensibles aux variations de température et de tension.

A ces différentes causes de variations viennent s'ajouter, lorsque le système comporte plusieurs liaisons optiques, la dispersion des caractéristiques de chaque sous-ensemble. Ainsi dans un système banalisé, on doit pouvoir associer, selon des configurations extrêmes, un émetteur à faible puissance à une fibre de grande longueur (ou à forte atténuation) à un récepteur de faible sensibilité, aussi bien qu'un émetteur de forte puissance à une fibre de courte longueur (ou à faible atténuation) à un récepteur de forte sensibilité.

L'information sous forme numérique à transmettre sur la fibre optique est obtenue en utilisant différents procédés de codage : modulation d'amplitude de la puissance lumineuse, modulation de fréquence ou de phase et modulation numérique (PCM). Dans le cas de la modulation d'amplitude, il est indispensable de connaître avec précision les différentes pertes afin de rétablir à la réception, et en jouant sur le gain, le niveau correct. Dans le cas de la modulation de fréquence, de phase et des modulations numériques, il est nécessaire de rétablir le niveau de manière approchée, la dynamique des systèmes de traitement, quoique limitée, pouvant accepter certaines variations de niveau.

Les transmissions numériques présentent en particulier une bonne tolérance aux modifications de la fonction de transfert ainsi qu'au niveau du bruit, ceci toutefois aux prix d'une bande passante plus large.

Les transmissions numériques optiquent présentent, par rapport aux transmissions électriques classiques, l'avantage d'une bande passante plus large (pouvant atteindre plusieurs centaines de Megabits/s sur plusieurs kilomètres) et une insensibilité aux parasites électromagnétiques. Cependant l'insensibilité aux modifications de la fonction de transfert doit être beaucoup plus grande (pour une transmission électrique, l'émetteur, le câble et le récepteur sont très peu sensibles aux variations fonction de la température, du vieillissement, etc.) et compte tenu de la difficulté à transmettre des fréquences allant jusqu'au continu, il est nécessaire d'utiliser des codes n'ayant pas de composantes vers le bas du spectre. Cette limitation des liaisons optiques vers les fréquences basses est causée essentiellement par le courant d'obscurité des photodiodes (PIN ou à avalanche) dont la valeur double tous les 8 °C environ et devient rapidement plus important que le signal, surtout pour des liaisons présentant une forte atténuation. A titre d'exemple, un récepteur à photodiode PIN présentant un courant d'obscurité de 5 nA à 25 °C produit à 105 °C un courant d'obscurité de 5 μA, soit mille fois plus élevé.

Si on admet un courant signal au moins égal à trois fois le courant d'obscurité pour un fonctionnement correct, ainsi qu'une pente de conversion puissance optique-courant de 0,5 μA/μW, la sensibilité du récepteur est limitée à 30 microwatts alors que l'élimination de la composante continue permettrait, moyennant une amplification suffisante, une sensibilité très en dessous du microwatt.

La difficulté à réaliser un amplificateur large bande, passant le continu, vient s'ajouter à celle précitée. Pour ces différentes raisons, il est nécessaire d'utiliser un code de transmission à composante continue nulle ou constante.

Compte tenu de la diversité des codes utilisés actuellement, une liaison qui ne pourrait transmettre qu'un code spécifique serait, par voie de conséquence, d'une utilisation limitée. Un système de transmission universel permet en revanche, moyennant un premier procédé de transcodage (code externe utilisateur, code interne) précédant l'émetteur optique et un second procédé de transcodage (code interne — code externe utilisateur) suivant le récepteur optique, de transmettre tous les codes quelle que soit leur forme. La durée de chaque bit peut ainsi être comprise entre une valeur minimale (fonction de la bande passante du système) et une valeur très élevée, le système de transmission fonctionnant ainsi comme un système transparent, ou système à débit variable compris entre 0 et un débit maximal, par exemple 0 à 10 Mbits/s.

L'utilisation du code interne présente, en dehors de la possibilité d'accepter un code externe quelconque, l'avantage de permettre l'optimisation de ce code interne en fonction des propriétés spécifiques d'un système de transmission optique sans tenir compte des contraintes du code externe, ou code utilisateur.

Le code interne sur la liaison émetteur-récepteur doit réaliser un compromis entre la fréquence nécessaire à sa transmission et la facilité de codage et de décodage. Les codes type NRZ sont à exclure malgré leur occupation de bande minimale, à cause de la nécessité de transmettre un niveau continu. Les codes de type biphase présentent une composante continue constante, mais nécessitent au niveau des deux transcodages des signaux d'horloge de cadence multiple de celle du code externe.

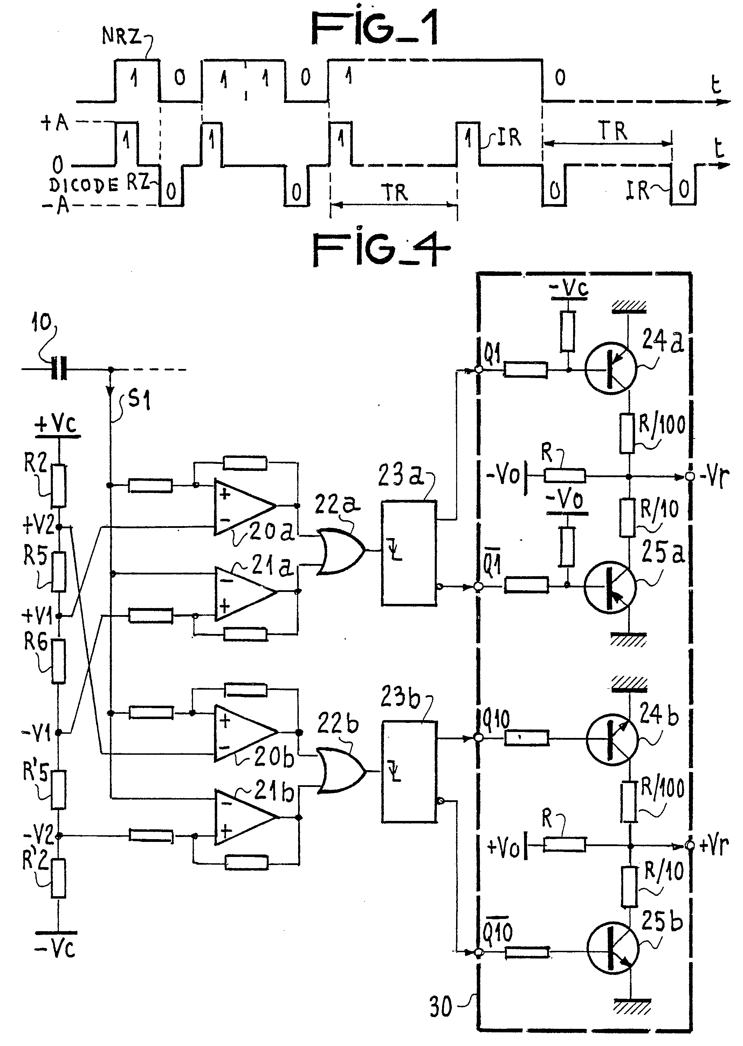

Le code retenu est un code à trois niveaux à valeur moyenne constante. Un code de ce type est celui dénommé dicode retour à zéro, ou dicode RZ (en terminologie anglo-saxonne PBP code, abréviation de Pulse-Bi-Polar code), il peut être comparé à une différentiation du code d'entrée. Ainsi, on ne code que les transitions (figure 1) ; une impulsion positive correspond à une transition 0-1, et une impulsion négative à une transition 1-0, (ou l'inverse). L'amplitude et la durée de chacune de ces impulsions sont identiques. La durée est choisie de préférence sensiblement égale à la moitié de la durée la plus faible (cadence maximale) du code externe. Comme on peut le constater, ce code présente une valeur moyenne constante. Ce code accepte parfaitement des bits de durée, allant jusqu'à l'infini. Toutefois, pour se protéger contre les parasites, si un bit 1 ou 0 du code externe dure un temps supérieur à une valeur prédéterminée TR (qui peut être choisie égale à plusieurs centaines de fois la durée de bit minimale, de manière à maintenir la valeur moyenne sensiblement constante), on produit automatiquement une impulsion de rafraîchissement IR correspondant à l'état précédent. Si le code d'entrée continue à rester dans le même état, une impulsion de rafraîchissement est ainsi produite automatiquement toutes les périodes TR. A titre indicatif, un code interne défini par une durée d'impulsion (positive ou négative) de 50 ns et une cadence TR de rafraîchissement de 50 µs accepte différents codes externes à débit variable, par exemple 0 à 10 Mbits/s en NRZ, 0 à 5 Mbits/s en biphase.

Un récepteur optique utilisant un tel code à trois niveaux est décrit notamment dans une publication de Hewlet Packard Components, Application Note 1000, éditée aux USA en août 1978 et intitulée « Digital Data Transmission with the HP Fiber Optic System ».

Suivant cette réalisation connue, le signal optique délivré par l'émetteur est codé dicode RZ et acheminé le long d'une fibre optique vers le récepteur. Celui-ci se compose d'une photodiode d'entrée connectée à un montage transimpédance groupant un amplificateur opérationnel et une résistance. La sortie de ce montage est traitée dans un circuit de commande automatique de gain, dit CAG, comprenant un amplificateur à gain variable contrôlée à partir de sa sortie à travers un filtre passe-bas. Le gain varie donc en fonction de la composante continue. La sortie du CAG est ensuite transmise vers deux comparateurs à seuils fixes et symétriques pour détecter l'un, les impulsions 1 et l'autre, les impulsions 0 du signal. Une bascule RS assure ensuite le transcodage pour récupérer l'information sous forme binaire NRZ.

Ce montage présente divers inconvénients, la chaîne de réception jusqu'au comparateur doit obligatoirement fonctionner en liaison continue, ce qui entraîne un fonctionnement dans une gamme de température limitée à cause de la variation du courant obscurité de la photodiode et des difficultés de réalisation des amplificateurs. Par ailleurs, un amplificateur à CAG à large bande présente souvent une distorsion en fonction du niveau du signal d'entrée (déformation du signal et modification de sa réponse en fréquence).

Suivant une autre réalisation analogue connue décrite dans le document WO-A-80/02092 et rappelée dans le préambule de la revendication 1, le signal détecté est appliqué à travers un condensateur qui sélectionne la composante alternative laquelle est ensuite amplifiée et remise en forme, avant de parvenir aux deux comparateurs à seuils symétriques. Le signal détecté est appliqué, par ailleurs, à un circuit générateur composé de montages amplificateurs pour élaborer les seuils symétriques dont la valeur varie en fonction de l'amplitude de la composante continue du signal. Malgré que la chaîne réceptrice parvenant aux comparateurs soit en liaison alternative, la variation importante du courant d'obscurité en fonction de la température entraîne celle des seuils ce qui limite également la dynamique de fonctionnement du récepteur.

Un but de la présente invention est de réaliser un récepteur optique à seuil remédiant à ces inconvénients. Pour permettre un fonctionnement dans une large gamme de température le récepteur optique est entièrement réalisé en liaison alternative, le générateur de seuils délivrant des valeurs de comparaison qui varient en fonction de l'amplitude des impulsions du signal utile détecté.

Suivant un objet de l'invention, le récepteur optique à seuils comporte une photodiode suivie d'un montage transimpédance où l'amplification présente une large bande passante située en dehors du continu ; la sortie de cet amplificateur est appliquée aux comparateurs symétriques à travers une liaison capacitive. Un circuit générateur des seuils de comparaison, alimenté par la sortie du condensateur de liaison, permet de faire varier les seuils parmi une pluralité de valeurs discrètes prédéterminées pour couvrir une large dynamique du signal.

Les particularités de l'invention apparaîtront dans la description qui suit donnée à titre d'exemple non limitatif, à l'aide des figures annexées qui représentent :

la figure 1, des signaux rappelant le codage dicode RZ à partir d'une information binaire NRZ ;

la figure 2, un diagramme général d'un récepteur optique conforme à la présente invention ;

la figure 3, un schéma partiel d'un deuxième exemple de réalisation d'un récepteur optique selon la figure 2 ;

la figure 4, un schéma partiel d'un deuxième exemple de réalisation d'un récepteur selon l'invention.

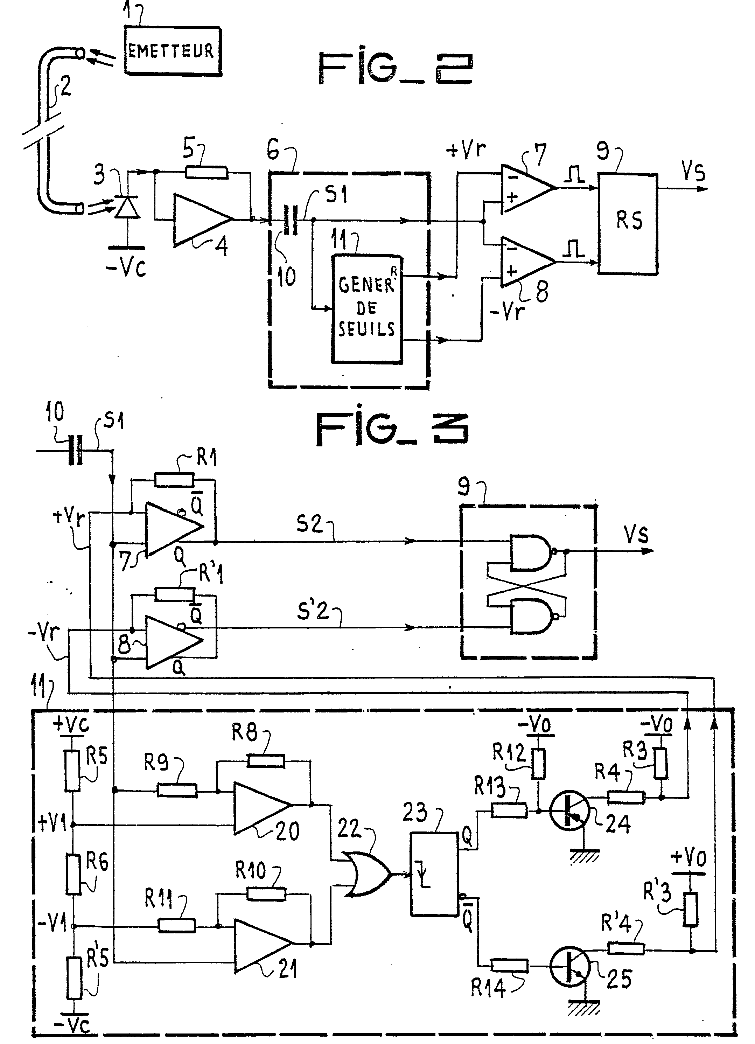

En se reportant à la figure 2, l'émetteur optique 1 du système de transmission numérique à débit variable, délivre le signal sous forme optique et codé selon un code à composante continue nulle ou constante, codage dicode RZ par exemple. Les impulsions lumineuses sont acheminées à travers la fibre optique 2 vers le récepteur optique.

Le récepteur comporte, comme dans l'art antérieur rappelé précédemment, un étage photodétecteur d'entrée 3 qui peut consister en une photodiode PIN ou à avalanche et qui est suivi d'un montage transimpédance à amplificateur 4 et à résistance 5. Vient ensuite un circuit de traitement 6 qui précède les comparateurs à seuils symétriques 7 et 8 et la bascule RS de transcodage 9.

Etant donné que le récepteur est réalisé en liaison alternative, l'amplificateur 4 peut consister en un amplificateur inverseur à large bande située en dehors du continu.

Le circuit de traitement 6 comporte d'une part, un condensateur 10 qui assure la liaison entre la sortie de l'amplificateur 4 et les comparateurs 7 et 8, et d'autre part, un circuit générateur 11 des seuils de comparaison. Le condensateur 10 élimine la composante continue et délivre le signal qui se présente sous forme d'impulsions positives et négatives de même amplitude et durée ; le niveau peut varier en fonction de la température et de l'état de la liaison. La sortie du condensateur 10 est également appliquée au circuit générateur de seuil 11 pour élaborer des valeurs de seuils symétriques en fonction de l'amplitude du signal. Un seul couple de valeurs de seuil, ou valeurs de référence, + Vr pour le comparateur 7, − Vr pour le comparateur 8, ne permet en effet de couvrir qu'une plage de variation du signal très limitée, de 1 à 10 fois la valeur de seuil environ, le fonctionnement perdant ensuite de sa fiabilité à cause des signaux parasites de bruit. En conséquence, le circuit 11 agit comme un organe de décision et permet, en fonction de l'évolution de l'amplitude du signal, de commuter les valeurs de seuils pour répondre à une dynamique élevée. La variation des seuils ou valeurs de références, est discontinue, s'effectuant parmi une pluralité de valeurs discrètes prédéterminées $\pm$ Vr1, $\pm$ Vr2, ... $\pm$ Vrn dont le nombre n est choisi en relation avec la dynamique à couvrir.

La figure 3 a trait à une représentation détaillée du récepteur dans le cas simple où une seule commutation des valeurs de référence est envisagée. Sur la figure 4 une réalisation de l'ensemble de décision 11 répond à une possibilité d'une double commutation des seuils et l'on voit que le circuit 11 comporte un nombre double de voies, le reste du récepteur étant inchangé.

Suivant la figure 3, le récepteur est représenté à partir du condensateur 10. Les résistances R1, R'1 adjointes aux comparateurs 7 et 8 assurent en liaison avec les résistances des sources de tensions de référence $\pm$ Vr, un niveau d'hystérésis qui est commuté en même temps que la valeur de référence permettant ainsi un fonctionnement proportionnel à faible et à fort niveaux. La bascule RS de transcodage est constituée de deux portes ET-NON rebouclées. Le circuit générateur de seuil 11 comporte une voie formée de deux comparateurs à seuils 20 et 21 où les impulsions positives et négatives notées 1 et 0 du signal S1 issu du condensateur 10 sont comparées à des niveaux symétriques + V1 et − V1 respectivement. Les sorties de comparaison sont appliquées à travers une porte OU 22 à un monostable redéclenchable. La sortie Q du monostable et sa sortie complémentaire Q attaquent deux circuits de commutation à transistors 24 et 25 pour obtenir la commutation des niveaux de référence entre

$$\pm \, Vo \text{ et } \pm \, Vo \, \frac{R4}{R3 + R4}.$$

En désignant par Vm et VM les amplitudes minimales et maximales des impulsions à la sortie S1, la réception doit donc pouvoir fonctionner avec une dynamique D donnée par $20 \log_{10} \dfrac{VM}{Vm}$ dB électriques.

En admettant que cette dynamique n'est pas trop étendue pour être compatible avec une seule commutation de seuil selon le cas de la figure 3, ce seuil doit être placé en sorte de diviser la dynamique sensiblement par deux. Ainsi, les références $\pm$ Vr variables doivent présenter, en valeur absolue, deux valeurs, l'une Vrm = kVm (avec 0 < k < 1, par exemple k = 0,8) et l'autre Vrm située à 1/2 D au-dessus soit,

$$VrM = Vrm \, \sqrt{\frac{VM}{Vm}}.$$

A titre d'exemple, pour un niveau d'entrée variant entre $\pm$ 10 mV et $\pm$ 1V, c'est-à-dire pour une dynamique de 40 dB, on peut attribuer aux références $\pm$ Vr variables les deux paires de valeurs $\pm$ 8 mV et $\pm$ 80 mV. Le circuit générateur de seuil 11 doit pouvoir élaborer ces deux paires de niveaux de référence et les sélectionner en fonction du niveau d'entrée. L'estimation du niveau d'entrée est réalisée par les comparateurs 20 et 21, les seuils $\pm$ V1 symétriques étant obtenus à partir de tensions d'alimentation $\pm$ Vc du pont diviseur à résistances R5, R6 et R'5, (R5 et R'5 étant égales). Pour éviter un fonctionnement

4

erratique la valeur absolue /V1/ est choisie supérieure à celle maximale de la référence /VrM/ ; ainsi, lors du passage de Vrm à VrM, les impulsions S1 ont un niveau suffisant pour franchir les seuils des comparateurs 7 et 8. Pour l'exemple considéré la valeur V1 peut être située à 100 mV et la commutation de 8 mV à 80 mV des seuils des comparateurs 7 et 8 s'effectuera en préservant un fonctionnement correct. En outre, pour éviter des commutations intempestives des comparateurs 20 et 21 au voisinage des seuils + V1 et − V1, ces circuits sont dotés d'une hystérésis fixée par les résistances R8-R9 et R10-R11 respectivement.

Les sorties des comparateurs 20 et 21 sont réunies à travers la porte OU logique 22 au monostable 23 redéclenchable sur le front négatif et de durée légèrement supérieure à la période de rafraîchissement TR. Ce monostable sert à mémoriser l'information de changement d'état des comparateurs 20 et 21. L'ajustement automatique des seuils suit donc les variations des niveaux de la liaison optique avec une constante de temps légèrement supérieure à la période de rafraîchissement TR. La durée de l'impulsion du monostable est fixée au-dessus de la période de rafraîchissement de manière à assurer un fonctionnement continu, la sortie du monostable redéclenchable reste au même niveau dans le pire des cas où le code externe restant inchangé, les seules impulsions apparaissant sur la ligne sont celles de rafraîchissement. Pour une période TR de 50 microsecondes, la durée du monostable est, par exemple, de 60 microsecondes environ. La sortie et la sortie complémentaire du monostable attaquent les deux circuits symétriques de commutation qui sont réalisés autour des transistors 24 et 25. Les résistances R3 et R4 permettent, par un choix convenable de leurs valeurs, de commuter à la fois la valeur Vr de la tension de référence et la résistance interne du montage.

Les transistors 24 et 25 fonctionnent en commutation. La résistance R12 supplémentaire côté transistor 24 est nécessaire à la commutation de ce dernier, sa tension de commande étant positive et sa tension de collecteur négative. Lorsque le signal S1 atteint les niveaux ± V1 le monostable 23 est déclenché et commande le blocage des transistors 24 et 25. Les tensions de références s'établissent au niveau VrM égal à Vo au moyen des tensions continues d'alimentation ± Vo en extrémité des résistances R3 et R'3 de même valeur. Les résistances internes valent R3 et R'3 respectivement et sont égales.

Inversement, lorsque le signal se situe entre ± V1, la sortie du monostable bascule et les transistors 24 et 25 fonctionnent à saturation délivrant les valeurs

$$\pm \text{ Vrm } = \pm \text{ Vo } \frac{R4}{R3 + R4} .$$

Les résistances R4 et R'4 sont égales et les résistances internes données par

$$\frac{R3 \times R4}{R3 + R4} = \frac{R'3 \times R'4}{R'3 + R'4} .$$

Compte tenu que le rapport entre les deux valeurs VrM et Vrm est élevé et beaucoup plus important que 1, la résistance R4 (ou R'4) est faible vis-à-vis de R3 (ou R'3) et dans ces conditions on peut écrire par approximation :

$$\frac{VrM}{Vrm} = \frac{R3}{R4} = \frac{R \text{ interne maximale}}{R \text{ interne minimale}}$$

L'hystérésis au niveau des comparateurs 7 et 8 dépend de la fraction de la tension de sortie des comparateurs ramenée à l'entrée par les résistances R1 et R'1 (de valeur égale) et par la résistance interne précitée Rint. En appelant VS2 la tension de sortie des comparateurs (VS2 = − VS'2), la tension d'hystérésis est égale à

$$VS2 \times \frac{Rint}{Rint + R1} ,$$

soit sensiblement

$$VS2 \times \frac{Rint}{R1}$$

car R1 est déterminée beaucoup plus grande que Rint. Ceci montre que l'hystérésis d'entrée reste sensiblement constante. Le rapport des valeurs V hystérésis présentées pour les références Vrm et VrM vérifie la relation :

$$\frac{Vhys.m}{Vhys.M} = \frac{Vrm}{VrM}$$

ce qui montre que la commutation des tensions de référence s'effectue tout en maintenant sensiblement constante l'hystérésis relative et, par voie de conséquence, un fonctionnement semblable est assuré à faible et à fort niveaux.

Le récepteur optique qui vient d'être décrit fonctionne avec une dynamique d'entrée égale à 100. Si l'on désire encore étendre cette dynamique, il est nécessaire de disposer d'un nombre plus élevé de niveaux de référence, trois ou plus au lieu de deux. Dans ce cas, seul le circuit générateur de seuil 11 est à modifier dans le récepteur.

Le schéma figure 4 s'applique à une référence à trois niveaux distincts ± Vr1 (valeur minimale), ± Vr2 (valeur moyenne) et ± Vr3 (valeur maximale) permettant de couvrir par exemple) une dynamique de l'ordre de 60 dB le signal S1 pouvant varier de ± 10 mv à ± 10 V. Les valeurs de référence sont déterminées de préférence en sorte de vérifier la relation

$$\frac{Vr3}{Vr2} = \frac{Vr2}{Vr1} = p$$

pour partager la dynamique d'entrée de manière uniforme. De façon générale, on obtient :

$$\frac{Vr2}{Vr1} = \frac{Vr3}{Vr2} = \cdots = \frac{Vr(j+1)}{Vrj} = \cdots = \frac{Vrn}{Vr(n-1)}$$

pour une réalisation à n valeurs de référence.

Pour l'obtention de trois niveaux le montage de la figure 3 est pratiquement doublé avec deux voies comportant deux paires de comparateurs 20a, 21a et 20b, 21b, les circuits portes OU 22a et 22b et les monostables 23a et 23b. Le pont de résistances entre ± Vc est déterminé pour produire deux valeurs de niveaux ± V2 et ± V1 également dans le rapport p. Le circuit de commutation 30, en aval des monostables, est également doublé, constitué des transistors 24a et 24b et 25a et 25b et de résistances.

Par exemple, pour un signal S1 allant de ± 10 mV à ± 10 V, les références ± Vr peuvent être ± 8 mV, ± 80 mV et ± 0,8 V, les références ± V1 et ± V2 étant placées à ± 100 mV et ± 1V respectivement.

Le tableau ci-après indique l'état des sorties des monostables 23a et 23b en fonction du niveau du signal S1.

| VS1 | Q1 | Q10 |
|---|---|---|
| 0 à V1 | 0 | 0 |
| V1 à V2 | 1 | 0 |
| supérieur à V2 | 1 | 1 |

Les réseaux de résistances en sorties du circuit de commutation 30 ont des valeurs respectives indiquées R, R/10 et R/100 pour produire à partir des tensions d'alimentation + Vo et − Vo, les trois paires de valeur Vr désirées ; les impédances sont ainsi proportionnelles dans le rapport p et permettent d'assurer au niveau des comparateurs 7 et 8 un fonctionnement à hystérésis relative constante. Le tableau ci-après résume les trois cas en fonctionnement :

| Q1 | Q10 | V Référence | R interne |
|---|---|---|---|
| 0 | 0 | VrM/100 | R/100 |
| 1 | 0 | VrM/10 | R/10 |
| 1 | 1 | VrM | R |

Selon la description qui précède, un récepteur optique conforme à l'invention est apte à équiper un système de transmission numérique par voie optique dans lequel l'émission est transmise suivant un code interne à composante nulle, le débit pouvant varier entre 0 et un débit maximal de 10 Mbits/s par exemple, le récepteur optique par son agencement particulier permettant à remédier aux limitations de montages connus, notamment celles imposées par la température. La complexité du récepteur est localisée dans le circuit générateur de seuil dont la conception est liée à l'étendue de la dynamique ; il y a lieu de noter que le montage simple et préféré à deux voies de comparaison selon la figure 3 permet déjà de couvrir aisément une dynamique de 40 dB, soit un rapport variant de 1 à 100 entre le signal minimal et le signal maximal.

Il y a lieu de remarquer également que pour une dynamique donnée, si l'on accroît le nombre de commutations de seuils par accroissement du nombre de voies du générateur de seuil, la variation des valeurs de seuil va se rapprocher de celle du signal.

## Revendications

1. Récepteur optique pour équiper un système de transmission numérique à débit variable par voie optique dans lequel l'information est transmise sous forme d'impulsions lumineuses codées selon un code à composante continue constante, ledit récepteur optique comportant un étage photodétecteur (3) en série avec un montage transimpédance (4-5) dont la sortie est appliquée à travers un condensateur de liaison (10) qui élimine la composante continue à un ensemble de deux comparateurs à seuil (7, 8) dont les valeurs de seuil sont symétriques, les sorties des comparateurs étant appliquées à un circuit de transcodage (9), et un circuit générateur (11) desdits seuils délivrant des valeurs de seuils variables en fonction du niveau du signal, ledit récepteur étant caractérisé en ce que la sortie du condensateur est appliquée, par ailleurs, à un groupe de comparateurs (20, 21) constituant l'entrée dudit circuit générateur de seuil lequel comporte, en outre, un circuit logique de commutation (24, 25) commandé par le groupe de comparateurs en sorte que lesdits seuils sont variables en fonction de l'amplitude desdites impulsions et que leurs valeurs sont sélectionnées parmi une pluralité de valeurs discrètes distinctes prédéterminées pour couvrir la dynamique d'exploitation désirée.

2. Récepteur optique selon la revendication 1 et dans lequel le montage transimpédance est constitué par un amplificateur et une résistance connectée entre la sortie de l'amplificateur et l'entrée recevant le signal détecté, caractérisé en ce que ledit amplificateur (4) est d'un type à large bande ne passant pas le continu.

3. Récepteur optique selon la revendication 1 ou 2, caractérisé en ce que les deux comparateurs à seuil (7 et 8) sont équipés chacun d'une boucle composée d'une résistance (R1 et R'1 montée entre la sortie et l'entrée recevant un seuil de référence (± Vr) pour produire avec les valeurs de résistance interne présentées par le circuit générateur de seuil (R3 et R3 × R4/R3 + R4 cas figure 3) une hystérésis relative sensiblement constante quelle que soit les valeurs de seuil commutées.

4. Récepteur optique selon l'une quelconque des revendications précédentes, caractérisé en ce que le circuit générateur de seuil comporte, pour produire n commutations des valeurs de seuil de référence (± Vr), autant de voies composées chacune, d'une paire de comparateurs symétriques (20, 21) pour comparer le signal de sortie (S1) du condensateur (10) à deux niveaux fixes symétriques (± V1), les sorties de comparaison de ladite voie étant appliquées à travers un circuit porte OU à un circuit monostable redéclenchable (23) qui alimente un circuit logique de commutation.

5. Récepteur optique selon la revendication 4 et qui reçoit une information codée selon un code interne à trois niveaux du type dicode RZ, caractérisé en ce que les niveaux fixes (± V1) de comparaison soient déterminés supérieurs à la valeur supérieure du seuil commuté par la voie considérée, et le circuit logique de commutation comporte deux réseaux de résistances (R3-R4, R'3-R'4) interposés entre une alimentation continue (± Vo) et le potentiel masse de référence à travers chacun un transistor (24, 25) fonctionnant par tout ou rien et contrôlé par une sortie du circuit monostable.

6. Récepteur optique selon la revendication 5, caractérisé en ce que le circuit générateur de seuil (11) comporte une seule voie pour produire une seule commutation (± Vrm, ± VrM) des seuils permettant de couvrir sensiblement une dynamique de 40 dB électriques du signal détecté.

7. Récepteur optique selon la revendication 5, caractérisé en ce que le circuit générateur de seuil (11) comporte deux voies pour produire deux commutations (± Vr1, ± Vr2, ± Vr3) des seuils permettant de couvrir sensiblement une dynamique de 60 dB électrique du signal détecté.

8. Utilisation d'un récepteur optique selon l'une quelconque des revendications précédentes dans un système de transmission numérique par voie optique et à débit variable, caractérisé en ce que le système est doté d'un émetteur optique produisant l'information codée selon un code à trois niveaux du type dicode RZ et avec une impulsion de rafraîchissement (IR) émise périodiquement lorsque le signal codé reste inchangé pendant une période (TR) déterminée, les impulsions lumineuses correspondant au codage étant acheminées le long d'un conducteur à fibre optique vers la photodiode du récepteur, le circuit monostable (23) qui équipe chaque voie du circuit générateur de seuil (11) ayant une durée supérieure à la période de rafraîchissement.

## Claims

1. Optical receiver for equipping a variable output rate optical system for digital transmission wherein the information is transmitted in the form of light pulses which are coded in accordance with a continuous constant component code, said optical receiver comprising a light detecting stage (3) in series with a transimpedance circuit (4-5) the output of which is applied through a connecting capacitor (10) adapted to eliminate said continuous component to a group of two threshold comparators (7, 8) the threshold values of which are symmetrical, the outputs of the comparators being applied to a transcoding circuit (9), and a threshold generator circuit (11) supplying threshold values that vary with the signal level, said receiver being characterized in that the output of the capacitor is further applied to a group of comparators (20, 21) that constitutes the input terminal of said threshold generator circuit which further comprises a logic commutation circuit (24, 25) controlled by said group of comparators, whereby said thresholds vary with the amplitude of said pulses and their values are selected from a plurality of distinct discrete predetermined values so as to cover the desired operation dynamics range.

**0 072 290**

2. Optical receiver according to claim 1, and wherein the transimpedance circuits is constituted by an amplifier and a resistor connected between the output terminal of the amplifier and the input terminal which receives the detected signal, characterized in that said amplifier (4) is of the broad band type allowing no passage of direct current.

3. Optical receiver according to claim 1 or 2, characterized in that said two threshold comparators (7 and 8) are equipped each with a loop including a resistor (R1 and R'1) connected between the output terminal receiving a reference threshold ($\pm$ Vr) for producing with the internal resistance values presented by said threshold generator (R3 and R3 $\times$ R4/R3 + R4 case of Fig. 3) a substantially constant relative hysteresis, whichever the commutated threshold values may be.

4. Optical receiver according to any one of the preceding claims, characterized in that the threshold circuit comprises, for performing n reference value ($\pm$ Vr) commutations, the same number of channels consisting each of two symmetrical comparators (20, 21) adapted to compare the output signal of said capacitor (10) to two fixed symmetrical levels ($\pm$ V1), the comparison outputs of said channel being applied through an OR-gate circuit to a restartable monostable circuit (23) which feeds a logic commutation circuit.

5. Optical receiver according to claim 4, and which receives an information coded in accordance with an internal three-level code of the RZ dicode type, characterized in that the fixed comparison levels ($\pm$ Vl) are determined to be higher than the higher value of the threshold commuted by the related channel, and the logic commutation circuit comprises two resistor networks (R3-R4, R'3-R'4) interposed each between a continuous supply ($\pm$ Vo) and the reference ground potential through the intermediary of a respective transistor (24, 25) operating according to the « ON-OFF » mode and controlled by an output of said monostable circuit.

6. Optical receiver according to claim 6, characterized in that the threshold generator circuit (11) comprises one single channel for performing one single commutation ($\pm$ Vrm, $\pm$ VrM) of the thresholds allowing substantially to cover a dynamics range of 40 electric dB of the detected signal.

7. Optical receiver according to claim 6, characterized in that the threshold generator circuit (11) comprises two channels for performing two commutations ($\pm$ Vr1, $\pm$ Vr2, $\pm$ Vr3) of the thresholds allowing substantially to cover a dynamics range of 60 electric dB of the detected signal.

8. Utilization of an optical receiver according to any one of the preceding claims in a variable output rate optical system for numeric transmission, characterized in that the system is equipped with an optical emitter producing the information coded in accordance with a RZ dicode type three-level code, and with a renewal pulse (IR) which is emitted periodically when the coded signal remains unchanged during a determined time period (TR), the light pulses corresponding to the coding being conveyed along a fibre light conductor toward the photodiode of the receiver, the monostable circuit (23) which equips each channel of the threshold generator circuit (11) having a duration longer than the renewal period.

**Patentansprüche**

1. Optischer Empfänger für ein optisches Numerikübertragungssystem mit veränderlicher Leistung, bei welchen Informationen in Form von vermittels eines Kodes mit stetiger, konstanter Komponente verschlüsselten Lichtimpulsen übertragen werden, wobei der optische Empfänger eine Fotodetektorstufe (3) aufweist, die in Reihe mit einer Durchgangswiderstandsstufe (4-5) geschaltet ist, deren Ausgang über einen die stetige Komponente aussiebenden Zwischenkondensator (10) mit einer Gruppe von zwei Schwellenvergleichern (7, 8) verbunden ist, deren Schwellenwerte symmetrisch sind und deren Ausgänge an einen Kode-Umsetzkreis (9) angeschlossen sind, während ein diese Schwellenwerte liefernder Erzeugerkreis (11) in Abhängigkeit vom Signalpegel veränderliche Schwellenwerte abgibt, dadurch gekennzeichnet, dass der Ausgang des Kondensators ferner an eine Gruppe von Vergleichern (20, 21) angeschlossen ist, die den Eingang des Schwellenwerterzeugerkreises bilden, welch letzterer ferner einen logischen Schaltkreis (24, 25) umfasst, der von der Vergleichergruppe gesteuert wird, sodass diese Schwellenwerte in Abhängigkeit von der Amplitude der Impulse veränderlich sind und unter einer Mehrzahl verschiedener vorbestimmter diskreter Werte gewählt werden, um der gewünschter Betriebsdynamik zu genügen.

2. Optischer Empfänger nach Anspruch 1, bei dem die Widerstandswandlerstufe durch einen Verstärker und einen zwischen dem Ausgang des Verstärkers und dem das aufgefundene Signal empfangenden Eingang liegenden Widerstand gebildet ist, dadurch gekennzeichnet, dass der Verstärker (4) ein keinen Gleichstrom durchlassender Breitbandverstärker ist.

3. Optischer Empfänger nach Anspruch 1 oder 2, dadurch gekennzeichnet, dass die beiden Schwellenwertvergleicher (7 und 8) mit je einer Schleife ausgestattet sind, die aus einem Widerstand (R1 und R'1) besteht, welcher zwischen dem Ausgang und dem einen Bezugsschwellenwert ($\pm$ Vr) empfangenden Eingang liegt, um die mit den inneren Widerstandswerten des Schwellenwerterzeugerkreises (R3 und R3 $\times$ R4/R3 + R4, Fall der Fig. 3) eine wesentlich konstante relative Hysteresis unabhängig von den geschalteten Schwellenwerten hervorzurufen.

4. Optischer Empfänger nach einem der vorhergehenden Ansprüche, dadurch gekennzeichnet, dass der Schwellenwerterzeuger zwecks Durchführung von n Bezugsschwellenwertschaltungen ($\pm$ Vr)

8

ebensoviele Kanäle aufweist, deren jeder aus einem symmetrischen Vergleicherpaar (20, 21) zum Vergleichen des Ausgangssignals (S1) des Kondensators (10) mit zwei symmetrischen unveränderlichen Pegeln besteht, wobei die Vergleicherausgänge dieses Kanals über eine ODER-Torschaltung mit einem wiederauslösbaren monostabilen Stromkreis (23) verbunden sind, der einen logischen Schaltkreis steuert.

5. Optischer Empfänger nach Anspruch 4, der eine gemäss eines Dreipegelkodes vom Typ RZ-Dikode verschlüsselte Information empfängt, dadurch gekennzeichnet, dass die unveränderlichen Vergleicherpegel ($\pm$ V1) höher als der von dem betreffenden Kanal geschaltete obere Schwellenwert gewählt sind, während der logische Schaltkreis zwei über je einen von einem Ausgang des monostabilen Stromkreises gesteuerten EIN-AUS-Transistor zwischen einer stetigen Stromquelle ($\pm$ Vo) und dem Erdpotential liegende Widerstandsnetze (R3R4, R'3-R'4) aufweist.

6. Optischer Empfänger nach Anspruch 5, dadurch gekennzeichnet, dass der Schwellenwerterzeugerkreis (11) einen einzigen Kanal zur Durchführung einer einzigen Schaltung ($\pm$ Vrm, $\pm$ VrM) der Schwellenwerte aufweist, die es gestatten, eine Dynamik von 40 elektrischen dB des aufgefundenen Signals wesentlich zu decken.

7. Optischer Empfänger nach Anspruch 5, dadurch gekennzeichnet, dass der Schwellenwerterzeugerkreis (11) zwei Kanäle zur Durchführung von zwei Schaltungen ($\pm$ Vr1, $\pm$ Vr2, $\pm$ Vr3) der Schwellenwerte aufweist, die es gestatten, eine Dynamik von 60 elektrischen dB des aufgefundenen Signals wesentlich zu decken.

8. Anwendung eines optischen Empfängers nach einem der vorhergehenden Ansprüche bei einem optischen Numerikübetragungssystem mit veränderlicher Leistung, dadurch gekennzeichnet, dass das System einen optischen Sender aufweist, der die Information erzeugt in gemäss eines Dreipegelkodes vom Typ RZ-Dikode verschlüsselter Form und mit einer bei während einer bestimmten Dauer (TR) unverändertem verschlüsseltem Signal periodisch abgegebenem Auffrischungsimpuls (IR), wobei die der Verschlüsselung entsprechenden Lichtimpulse längs eines Fiber-Lichtleiters einer Fotodiode des Empfängers zugeleitet werden und der jedem Kanal des Schwellenwerterzeugerkreises (11) zugeordnete monostabile Stromkreis (23) eine Dauer besitzt, die länger ist, als die Auffrischungsperiode.

0 072 290

# FIG_1

# FIG_4

1

# FIG_2

EMETTEUR — 1

EMMETTEUR

GENER^R DE SEUILS

+Vr

-Vr

RS

VS

# FIG_3

S1

+Vr

-Vr

R1

R'1

S2

S'2

Vs

11

+VC

R5

+V1

R6

-V1

R'5

-VC

R9

R8

20

R10

R11

21

22

23

R13

R12

R4 R3

24

R14

+V0

R'3

R'4

25

-V0 -V0

2